# EUROPEAN PATENT APPLICATION

(11) **EP 2 808 840 A1**
(43) Date of publication of application: **03.12.2014**
(21) Application number: 13169466.3
(22) Date of filing: 28.05.2013
(51) Int. Cl.: G06Q 99/00, A01G 25/16, A01G 27/00

(54) **RFID- enabled plant label, plant care system, plant care method and computer program product**

(71) Applicant: NXP B.V., 5656 AG Eindhoven (NL)
(72) Inventor: Brandsma, Ewout, 5656 AG Eindhoven (NL); Syed, Aly Aamer, 5656 AG Eindhoven (NL); Hendricksen, Ruud, 5656 AG Eindhoven (NL); van Daele, Theo, 5656 AG Eindhoven (NL); Geraets, René, 5656 AG Eindhoven (NL)
(74) Representative: Krott, Michel

(57) **Abstract**

According to an aspect of the invention, an RFID-enabled plant label is conceived which comprises an RFID-tag integrated circuit, an RFID antenna being coupled to the RFID-tag integrated circuit and a soil moisture sensor being coupled to the RFID-tag integrated circuit, wherein said RFID-tag integrated circuit is arranged to receive soil moisture measurement results from said soil moisture sensor.

## Description

### FIELD OF THE INVENTION

The invention relates to an RFID-enabled plant label, to a plant care system, to a plant care method, and to a computer program product.

### BACKGROUND OF THE INVENTION

People enjoy keeping plants in their home for aesthetic reasons. Many of those plant-lovers lack the proverbial "green fingers"; their plants do not thrive, yet lead a miserable and often brief existence. For example, they either get too much water or too little, turn brown and die. To address this problem a variety of products have appeared on the market.

For example, the "Koubachi Wi-Fi Plant Sensor" essentially is a wireless sensor node measuring multiple modalities affecting the plant. It comprises a protruding element for sticking it into the soil of the pot containing the plant. The protruding element comprises a soil moisture sensor. The Koubachi sensor also comprises additional environmental sensors for determining temperature and lighting conditions. It furthermore comprises a power source (batteries) and a Wi-Fi radio for transmitting the results to a Wi-Fi access point. The product is supported by a full-blown cloud service including a lot of application know-how (plant database), which can be accessed, for example, by a PC or a smart phone. Although this solution provides a complete integrated solution for plant care it is very expensive. This cost may be prohibitive considering that the average home may contain many pot plants, each in need of a monitoring device. Also, the user needs to take several steps to properly set up the device: connect to the home Wi-Fi network and associate the sensor with a particular type of plant in the plant database. This act of commissioning is not user-friendly.

As another example, the "ThirstyLight Digital Plant Moisture Sensor" uses a much simpler approach. It only measures soil moisture by means of a protruding element. It uses a flashing light to indicate that the plant needs watering; the dryer the faster the blinking. Although the cost is much lower than the cost of the above-mentioned Koubachi sensor, it may still be significant considering the multitude of plants in a home. Contrary to the Koubachi sensor it is completely stand-alone (i.e. no cloud service) and it is not associated with a particular type of plant; when the soil is relatively dry it will start blinking, irrespective of whether it is next to a cactus or a fern, for example.

Many other systems for monitoring plant growth conditions are known. However, these systems typically address more professional applications, such as greenhouse automation.

### SUMMARY OF THE INVENTION

It is an object of the invention to facilitate plant care, in particular by means of a relatively cheap and user-friendly plant care solution. This object is achieved by an RFID-enabled plant label as defined in claim 1, by a plant care system as defined in claim 16, by a plant care method as defined in claim 24, and by a computer program product as defined in claim 25.

According to an aspect of the invention, an RFID-enabled plant label is conceived which comprises an RFID-tag integrated circuit, an RFID antenna being coupled to the RFID-tag integrated circuit and a soil moisture sensor being coupled to the RFID-tag integrated circuit, wherein said RFID-tag integrated circuit is arranged to receive soil moisture measurement results from said soil moisture sensor.

According to an illustrative embodiment of the invention, the RFID-tag integrated circuit is further arranged to transmit the soil moisture measurement results through the RFID antenna to an RFID reader device for further processing.

According to a further illustrative embodiment of the invention, the RFID-tag integrated circuit is further arranged to compute a plant care advice based on the soil moisture measurement results and to transmit the plant care advice through the RFID antenna to an RFID reader device for further processing.

According to a further illustrative embodiment of the invention, plant care parameters related to a specific plant and/or a specific pot are stored in a non-volatile memory unit of the RFID-enabled plant label.

According to a further illustrative embodiment of the invention, the RFID-tag integrated circuit is further arranged to compute a plant-specific and/or a pot-specific plant care advice based on the soil moisture measurement results and on said plant care parameters, and to transmit the plant-specific and/or the pot-specific plant care advice through the RFID antenna to an RFID reader device for further processing.

According to a further illustrative embodiment of the invention, if plant care parameters related to a specific plant are stored in said non-volatile memory unit, said plant care parameters comprise at least one threshold value for the soil moisture.

According to a further illustrative embodiment of the invention, the RFID-tag integrated circuit is further arranged to select a threshold value from a plurality of threshold values in dependence on a state of the specific plant and/or on the time-of-year, and to compute a plant-specific plant care advice using the selected threshold value.

According to a further illustrative embodiment of the invention, if plant care parameters related to a specific pot are stored in said non-volatile memory unit, said plant care parameters comprise the volume of said specific pot.

According to a further illustrative embodiment of the invention, the plant care parameters are pre-stored into the non-volatile memory unit upon manufacturing of the plant label or the plant care parameters are written into the non-volatile memory unit by an RFID reader device, and, if the plant care parameters are written into the non-volatile memory unit by the RFID reader device, the plant care parameters may have been entered manually by a user on the RFID reader device, fetched upon selection from a database stored on the RFID reader device or retrieved by the RFID reader device from a remote database.

According to a further illustrative embodiment of the invention, additional information about a plant is stored in the non-volatile memory unit, said additional information being provided in human-readable format or by reference to a website.

According to a further illustrative embodiment of the invention, the RFID-enabled plant label further comprises at least one additional sensor of the group containing: a sensor for measuring nutrient-related parameters, a sensor for measuring biochemical parameters and a sensor for measuring environmental parameters; the at least one additional sensor is coupled to the RFID-tag integrated circuit, and said RFID-tag integrated circuit is further arranged to receive measurement results from the at least one additional sensor and, optionally, to compute a plant care advice based on measurement results from the at least one additional sensor.

According to a further illustrative embodiment of the invention, the RFID-tag integrated circuit is further arranged to create a log of measurement results and, optionally, to compute a plant care advice based on said log of measurement results.

According to a further illustrative embodiment of the invention, the RFID-enabled plant label is further arranged to extract operating power from the RF field generated by an RFID reader device.

According to a further illustrative embodiment of the invention, the RFID-enabled plant label further comprises a label part, said label part comprising visible, human-readable information corresponding to plant-specific data stored in a non-volatile memory unit of the RFID-tag integrated circuit.

According to a further illustrative embodiment of the invention, said RFID-enabled plant label is integrated in a plant pot.

According to a further aspect of the invention, a plant care system is conceived which comprises an RFID-enabled plant label of the kind set forth and an RFID reader device, wherein said RFID reader device is arranged to receive measurement results and/or a plant care advice from the RFID-tag integrated circuit, to compute a plant care advice if it has received measurement results, and to display the measurement results, the received plant care advice and/or the computed plant care advice.

According to a further illustrative embodiment of the invention, the RFID-tag integrated circuit is an NFC tag and the RFID reader device is an NFC-enabled mobile device.

According to a further illustrative embodiment of the invention, the RFID reader device is a watering can.

According to a further illustrative embodiment of the invention, an RFID reader antenna is mounted on or near the bottom side of a container or a tube of said watering can, and a display unit is mounted on the top side of said container or tube.

According to a further illustrative embodiment of the invention, said watering can comprises a water supply measurement unit which is arranged to measure the amount of water supplied to a plant.

According to a further illustrative embodiment of the invention, the RFID reader device is further arranged to read measurement results and/or plant care advices from a plurality of RFID-enabled plant labels within its communication range, to compute plant care advices if it has received measurement results, and to display the respective measurement results, received plant care advices and/or computed plant care advices.

According to a further illustrative embodiment of the invention, the RFID reader device is further arranged to display said respective measurement results and/or said respective plant care advices in order of proximity of the corresponding RFID-enabled plant labels.

According to a further illustrative embodiment of the invention, the RFID reader device is further arranged to read measurement results from a plurality of RFID-enabled plant labels within its communication range, and to create a log of said measurement results for each RFID-enabled plant label within said communication range, such that a plant care advice may be generated for each corresponding plant.

According to a further aspect of the invention, a plant care method is conceived wherein an RFID reader device receives measurement results and/or a plant care advice from an RFID-tag integrated circuit comprised in an RFID-enabled plant label of the kind set forth, wherein the RFID reader device computes a plant care advice if it has received measurement results, and wherein said RFID reader device displays the measurement results, the received plant care advice and/or the computed plant care advice.

According to a further aspect of the invention, a computer program product is conceived which comprises program elements executable by an RFID reader device or an RFID-tag integrated circuit, said program elements comprising instructions which, when being executed by said RFID reader device and RFID-tag integrated circuit, carry out or control respective steps of a method of the kind set forth.

### BRIEF DESCRIPTION OF THE DRAWINGS

The invention will be described in more detail with reference to the appended drawings, in which:
Figs. 1(a)-(b) illustrate RFID-enabled plant labels in accordance with illustrative embodiments of the invention;
Fig. 2 illustrates a plant care system in accordance with a further illustrative embodiment of the invention;
Fig. 3 illustrates an RFID-enabled watering can in accordance with a further illustrative embodiment of the invention;
Figs. 4(a)-(b) illustrate RFID-enabled plant labels with a resistance-based soil moisture sensor;
Fig. 5 illustrates an RFID-enabled plant label with a capacitance-based soil moisture sensor;
Figs. 6(a)-(c) illustrate different options for IC placement on the support structure of an RFID-enabled plant label;
Fig. 7 illustrates a plant care system in accordance with a further illustrative embodiment of the invention.

### DESCRIPTION OF EMBODIMENTS

In accordance with the present disclosure, an RFID-enabled plant label is conceived that comprises an RFID-tag IC, an RFID antenna and a soil moisture sensor mounted on a support structure. The RFID-tag IC is connected to the RFID antenna and to the soil moisture sensor. The support structure may have a protruding part that may be inserted into the soil of a pot plant and a label part that may accommodate written or printed information about the plant. Furthermore, a plant care system is conceived that comprises an RFID-enabled plant label of the kind set forth and an RFID reader device with a display. The RFID reader device is used to read soil moisture measurements from the plant label's RFID-tag IC and to display the measurement results and/or a plant care advice based on said measurement results. The plant care advice may comprise only a relatively simple watering advice (e.g. a binary advice: "add water", "don't water"), a more exact quantitative watering advice, or a more comprehensive advice that also takes into account nutrient-related and environmental factors, for example.

In an illustrative embodiment, the RFID-tag IC is an NFC-tag and the RFID reader device is embedded in an NFC-enabled mobile device, for example an NFC-enabled mobile phone. In an illustrative embodiment of a plant care method, a user first "touches" the plant label with the NFC-enabled mobile device to obtain a soil moisture measurement and/or a plant care advice and subsequently waters the plant accordingly. Optionally, the watering needs of a specific plant type are also stored in a non-volatile memory unit of the RFID-tag IC and the plant care advice is also based on the plant's specific watering needs.

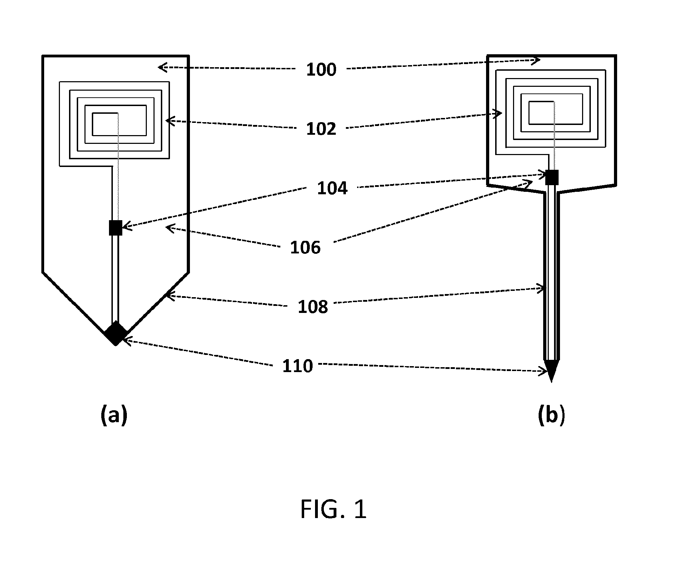

**Figs. 1(a)****-(b)** illustrate RFID-enabled plant labels in accordance with illustrative embodiments of the invention. Both RFID-enabled plant labels comprise a label part 100, an RFID antenna 102, an RFID-tag IC 104, a support structure 106, a protruding part 108, and a soil moisture sensor 110. The form of the support structure 106 of the embodiment shown in Fig. 1(a) is different from the form of the support structure 106 of the embodiment shown in Fig. 1(b). The support structure 106 may, for example, be a flat but rigid piece of plastic. For reliable soil moisture measurement, the soil moisture sensor 110 should be buried deep enough in the soil. For example, a depth of at least 2" (5 centimeters) may be required for reliable measurement. Deeper soil layers remain moist longer than the surface and the plant's roots typically reach for these deeper layers. The embodiment shown in Fig. 1(b) may be buried relatively easily into the soil.

In an illustrative embodiment, the operation of the RFID-enabled plant label is powered by the RF field generated by the RFID reader device. In that case, the RFID-enabled plant label does not need a power source (e.g. batteries) of its own. An RFID-enabled plant label provides an intuitive and cost-effective means for a user to receive advice on providing an appropriate amount of water to a plant. This advice may depend on the specific plant type. Furthermore, the installation and maintenance effort is minimal. For example, battery replacement is not required.

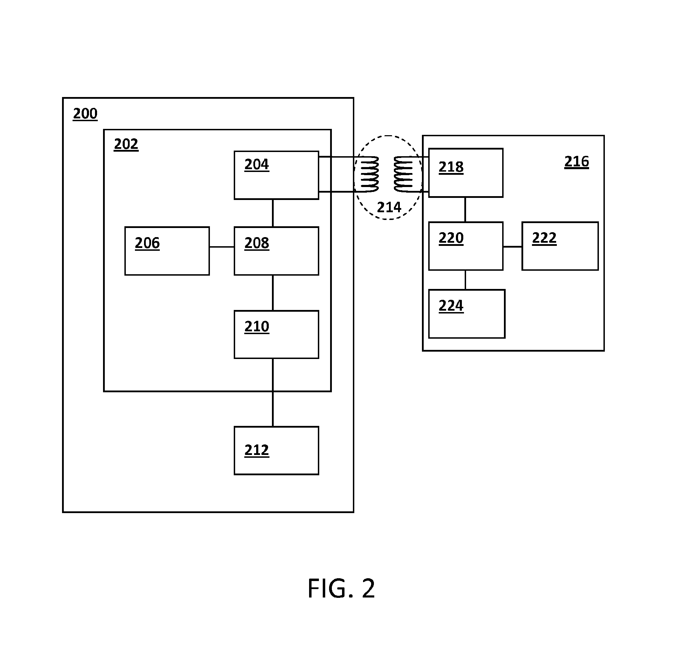

**Fig. 2** illustrates a plant care system in accordance with a further illustrative embodiment of the invention. The plant care system comprises an RFID-enabled plant label 200 and an RFID reader device 216. The plant label 200 comprises an RFID-tag IC 202 connected to a soil moisture sensor 212, as well as an RFID antenna (coil symbol) connected to the RFID-tag IC 202. All these components of the plant label 200 are mounted on a support structure (not shown). The RFID-tag IC 202 comprises an RFID transponder 204, a memory unit 206, a controller 208 and a sensor interface 210. The RFID reader device 216 comprises an RFID reader component 218, a controller 220, a memory unit 222 and a display 224. In operation, an RFID interface 214 (i.e. an RFID connection) is set up between the plant label 200 and the RFID reader device 216.

In this illustrative embodiment, the RFID interface 214 is a short-range RFID interface. A typical operating frequency of short-range RFID interfaces (for example NFC and ICODE) is 13.56 MHz. To perform readout of the soil moisture measurement or to obtain a plant care advice, the RFID reader device 216 must be brought into close range (< 10 cm) of the plant label 200. In this case, the RFID reader device 216 is a portable device. For example, the RFID reader device 216 may be an NFC-enabled mobile phone or a smart watering can. An NFC-enabled mobile phone may for example execute a dedicated plant care application ("app") to support the care method. Optionally, the RFID reader device 216 may also comprise user input means (not shown).

Although it is not necessary that all components of the plant label 200 are monolithically integrated in a single IC, for cost reasons it is beneficial. The memory unit 206 may be a non-volatile memory unit. The sensor interface 210 may comprise signal conditioning means dedicated to the type of soil moisture sensor used, as well as an analog-to-digital convertor (ADC). It should be noted that the whole operation of the plant label 200 may be powered from the RF field generated by the RFID reader device 216. In that case, the RFID reader component 218 in the RFID reader device 216 is called an "active" device in RFID terminology, and the RFID transponder 204 comprised in the RFID-tag IC 202 is called a "passive" device in RFID terminology.

### Smart watering can

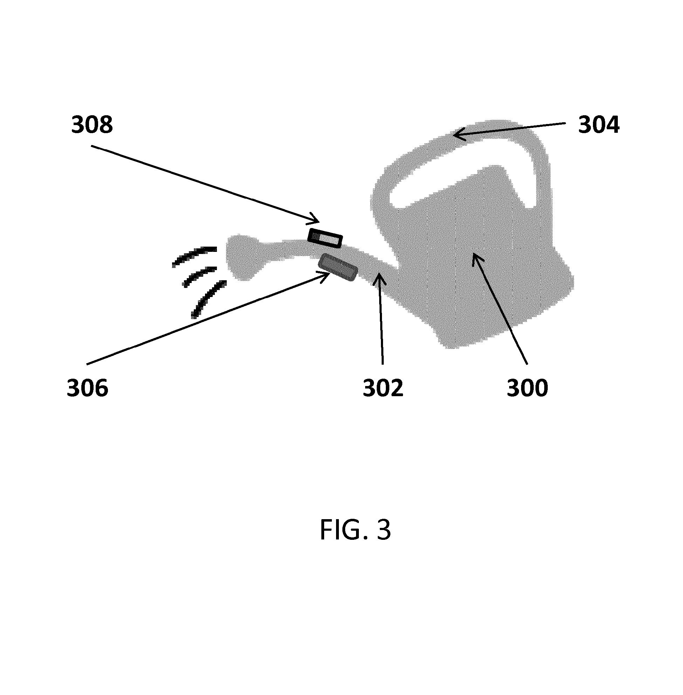

**Fig. 3** illustrates an RFID-enabled watering can in accordance with a further illustrative embodiment of the invention. The smart watering can comprises a container 300, a tube 302, a handle 304, an RFID antenna 306 connected to an RFID reader device (not shown) and a display 308 connected to, or embedded within, said RFID reader device. The display 308 can be a very simple indicator used to convey whether water needs to be supplied to the plant and optionally an indication of how much water is to be supplied, for example, a few LEDs or a speaker capable of producing beeps. When watering the plants, the user simply "touches" the plant label with the watering can and subsequently pours water into the pot depending on the feedback from the watering can's display 308. The display (in this case colored LEDs) is mounted in a convenient location for the user to see it while watering the plant (e.g. on the top side of the tube 302), whereas the RFID antenna 306 is mounted in a convenient location for "touching" the plant label (e.g. on the bottom side of the tube 302 or the container 300). The smart watering can enables the user to read out the plant label and simultaneously water the plant using only a single hand, as opposed to e.g. an NFC-enabled mobile phone as a separate device for reading out the plant label.

Optionally, the smart watering can comprises a flow sensor (not shown) that measures the amount of water flowing through the tube 302 and hence being supplied to a plant. An alternative to a flow sensor could be a water level sensor in the container 300 or a weight sensor in the handle 304. Furthermore, a tilt sensor could also be used to monitor the pouring process. If the plant care advice involves a measurable amount of water to be added to the plant (see the section "Providing plant specific parameters" below), the display 308 may simply indicate that sufficient water has been added and that the user can stop pouring. This indication may, for example, involve lighting an LED or sounding a beep. It should be noted that the soil moisture sensor in the plant label cannot be used as an immediate means to detect whether sufficient water has been added, because the newly poured water needs time to spread through the soil in the pot.

### Physical realization of the plant label

A plant label in accordance with the present disclosure may be fabricated in a low cost production process such as roll-to-roll processing for creating a printed laminate comprising all functional elements of the plant label. This is also known as a "system-in-foil".

As a system-in-foil might be too flexible, a more rigid support structure, such as a piece of plastic may have to be added in a subsequent step. Basically, the piece of plastic may be a simple plant label as generally known from the prior art. The electronics can for example be applied at the back side, whereas the printed or writeable area can be at the front side. Also the electronics can be in the bulk of the plastics with printing and/or writing on either side.

Furthermore, a plant-specific plant label may be provided containing plant-specific information in print, which is also known as such. For example, such a plant label is typically sold as a complimentary item with the plant. The plant-specific information may contain the name of the plant (in Latin and in a local language), a picture of the plant or its blossoms and care instructions. Optionally, in accordance with the present disclosure, such a complimentary printed label contains plant-specific parameters pre-stored in its non-volatile memory (see "Providing plant specific parameters" below).

Alternatively, a blank (i.e. non plant-specific) plant label is provided, which is also known as such. Instead of pre-printed information, this label provides the user with the possibility to write on the label with, for example, a pen, pencil or marker. Optionally, in accordance with the present disclosure, the user can provide such a blank label with plant-specific parameters to be stored in its non-volatile memory by means of an RFID reader device (see "Providing plant specific parameters" below). It is noted that, in RFID terminology, an "RFID reader" typically refers to a device with both read and write capability.

It is also conceivable to provide the plant label as an integral part of the plant pot itself ("plant pot integrated label"). For example, many plants are sold in plastic pots. Such a plastic pot could provide an additional piece of plastic above its rim. Basically, in that case the pot becomes the support structure itself, with the soil moisture sensor mounted on the inner side of the pot and the RFID antenna mounted on the additional piece of plastic. The additional piece of plastic could additionally function as pre-printed (or pen-writable) label. Optionally, a plurality of moisture sensors may be mounted on the inner side of the pot, for example on different heights and/or around the circumference. Their respective readings may be averaged to get a more reliable moisture determination and/or the difference between their readings may be used to get an indication of water distribution within the pot.

### Providing plant care parameters

The watering needs of a plant depend on its type. As extreme examples, a fern requires a very moist environment, whereas a cactus requires a very dry one. This means that the same soil moisture measurement may result in an "add lots of water" advice for the fern and a "don't water" advice for the cactus.

To enable the care system to provide a proper plant care advice dependent on the specific type of plant, plant care parameters, more particularly plant-specific plant care parameters, may be stored in the plant label's non-volatile memory. Such plant-specific plant care parameters may comprise one or more threshold values for soil moisture. For example, if one threshold value is used, a measured soil moisture above the threshold will result in a "don't water" advice, whereas a measured soil moisture below the threshold will result in an "add water" advice. As another example two threshold values are used, a lower and a higher one. If soil moisture is between both thresholds, an "add little water" advice is given. Below the lowest threshold "add lots of water" is advised and above the highest threshold "don't water" is advised.

As yet another example, a plurality of (sets of) thresholds may be used, each threshold (or set of thresholds) relating to a different possible state of the plant, for example "blooming" vs. "non-blooming". The user may select a particular (set of) threshold(s) for generating the plant care advice depending on the actual state of the plant, for example by actuating a switch or changing a setting (i.e. optional user input means) on the RFID reader device. Similarly, a plurality of (sets of) thresholds may be used, each threshold (or set of thresholds) relating to a different time-of-year (e.g. in the summer more water is needed than in the winter). In this case, the RFID reader device must comprise a clock and calendar to automatically select a particular (set of) threshold(s) for generating the plant care advice depending on the time-of-year. Also other examples or combinations of the examples described above can be envisaged.

In addition to plant-specific watering thresholds, the plant care parameters may comprise pot-specific parameters, in particular a parameter that represents the volume of the pot containing the plant. Next to comparing the soil moisture measurement to the threshold(s), this pot volume may play a role in determining the amount of water to be added; a large pot requires more water to reach a certain moisture level than a small pot. It must be noted that the combination of actual soil moisture, target soil moisture and pot volume can be used to provide an exact quantitative plant care advice, i.e. a plant care advice specifying a measurable amount of water to be added (e.g. "add 200 cc of water").

Generating a plant care advice given an actual soil moisture measurement and a (selected) (set of) threshold(s) requires a minimal amount of processing. This processing may be executed by either the controller of the plant label or by the controller of the RFID reader device.

As mentioned above, for (complimentary pre-printed) plant-specific plant labels these plant-specific plant care parameters can be pre-stored in the non-volatile memory unit of the RFID-tag IC. That is, during the manufacturing process of the plant labels (e.g. when printing the plant-specific information), the plant-specific plant care parameters may be written into the non-volatile memory unit by means of an RFID writer.

For a blank (i.e. non plant-specific) plant label, the plant-specific plant care parameters may have to be provided by the user. In this case the user may be a consumer, but also a grower labeling smaller series of plants manually. Typically, the user will use an RFID writer device, e.g. an NFC-enabled mobile phone. For example, the above-mentioned plant care "app" may provide means for writing plant-specific plant care parameters into plant labels in addition to giving plant care advice.

For a plant pot integrated label, both plant-specific and pot-specific plant care parameters may be provided as part of the production process (i.e. during the potting of the plants). If an empty plant pot with integrated label is delivered to a user, it may contain pot-specific parameters, but no plant-specific parameters upon such delivery.

Several options exist for the RFID writer device to generate the proper plant-specific parameters for the plant at hand. As one option, the user can key in the parameters manually into a form provided by the "app". As another option, the RFID writer device may comprise a database with plant-specific parameters and means for searching a specific plant type's parameters by means of e.g. (Latin and/or common) name. In this case, the user will key in a name instead of the underlying parameters. As yet another option, the database may actually reside on the Internet and be provided as a service. Clearly, in that case the RFID writer device requires Internet access, but for a smart phone this is typically the case. It is even conceivable that the database search uses an image of the plant as a search parameter rather than a plant name. For example, the plant care "app" could enable the user (in a single action) to: take a picture of his/her plant, subsequently upload that picture to the Internet service, retrieve the plant-specific parameters (as well as optional support information such as Latin and common name and care instructions) and store them in the non-volatile memory of the plant label.

### Additional information stored in plant label

The non-volatile memory unit of the plant label may be used to store more information than the plant-specific plant care parameters (such as thresholds) that may be used for generating a plant care advice. For example, additional human-readable information relating to the specific type of plant may be stored electronically as well, for example: Latin name, common name in various languages, care instructions, pictures of the plant type in various stages, etc. The same or similar information may be pre-printed on the complimentary plant label as well. This information may be provided literally and/or by reference (e.g. by means of a URL pointing to a website containing the literal information). One feature of the plant care "app" may be simply to provide access to that additional information. Furthermore, information about where to obtain (e.g. again a URL pointing to a website) and how to install the plant care "app" may be stored in the non-volatile memory unit of the plant label. This may be used to enable an automatic download and install if and when a mobile phone is used for the care method in accordance with the present disclosure for the first time.

### Soil moisture sensors

Various principles to sense water content in soil are known in the art. A very straightforward sensor simply measures the ohmic resistance between two bare (galvanized) wires or metal strips that are either stuck into the soil directly or embedded in gypsum.

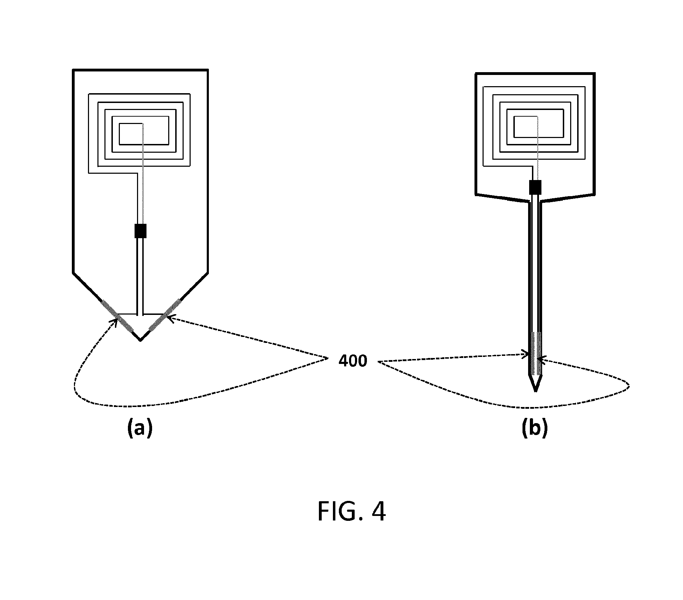

**Figs. 4(a)****-(b)** illustrate RFID-enabled plant labels with a resistance-based soil moisture sensor, corresponding to the plant labels shown in Figs. 1(a)-(b). The plant labels have two bare metal strips directly attached to the support structure. Another option is to apply the two strips on the front and the back side of the support structure respectively. It should be noted that the remainder of the electronics (i.e. connecting wires, RFID-tag IC and RFID antenna) should preferably be properly insulated from the environment, for example by a non-conductive foil covering them.

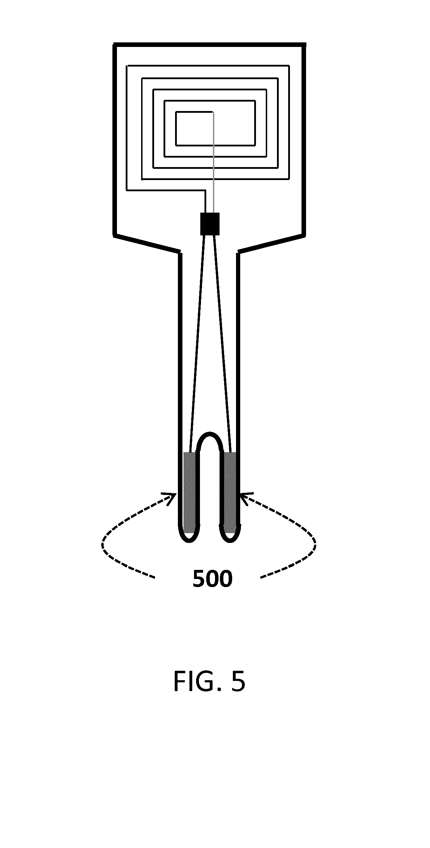

**Fig. 5** illustrates an RFID-enabled plant label with a capacitance-based soil moisture sensor. Frequency domain sensors measure either capacitance of the soil or reflections from a mismatch in impedance between a coaxial line and the soil. Frequency domain sensors are based on the principle that the dielectric constant of the soil is very dependent on its water content. For a capacitance sensor, the two capacitor plates must preferably be insulated from the soil and spaced apart by soil (rather than e.g. plastic).

From the above it can be concluded that the actual sensor at the bottom of the protruding part of the support structure of the plant label comprises no more than a pair of (insulated or non-insulated) wires or strips that are connected to the RFID-tag IC. Any signal conditioning is preferably performed by the sensor interface embedded in the RFID-tag IC.

The plant labels shown in Figs. 4(a)-(b) and Fig. 5 may be enhanced by applying a water absorbing material (particularly gypsum) around and/or in between the wires or strips. The point of using gypsum is that its water content is proportional to the water content of the surrounding soil, but that its conductivity (resp. dielectric constant) is less affected by the saline content of the soil than would be the case when the electrodes would be buried in the soil itself. This means that a more accurate soil moisture measurement can be obtained than would be possible with bare electrodes. It should be noted that the saline content of the soil may change depending on how much fertilizer was applied.

Other measurement principles may also be applied. However, it should be noted that any sensor must be optimized for power usage as its operating power may be harvested from the RF field.

### Additional sensors

Optionally, the plant label may be enabled to sense more parameters in the soil, i.e. not only moisture. Particularly, it may be advantageous to provide sensors for nutrient-related parameters, for example pH or chemical compounds or elements commonly used in fertilizers. This means that the plant label comprises a plurality of sensors disposed at the bottom end of the protruding part of the support structure and that the care system may provide a nutrient advice (e.g. "add 10 cc's of liquid nutrient") in addition to a watering advice. Furthermore, such sensors may additionally be used to cross-calibrate conduction- or capacitance-based moisture sensors to compensate for changes in conductivity or dielectric constant caused by variations in saline concentrations (see also the section "Soil moisture sensors" above). Some of these sensors may be integrated in a silicon device, in particular in the RFID-tag IC (which in that case must be disposed at the bottom of the protruding part). It is even conceivable to sense biochemical parameters related to, for example, plant diseases and provide an appropriate care advice.

Furthermore, the plant label may be enabled to sense parameters in the environment. For example, ambient temperature, light level, relative humidity, CO₂ concentration and ethylene concentration have a significant impact on plant growth and therefore may be monitored by the plant label as well. Sensors for such environmental parameters (as opposed to soil parameters) must be disposed at the label part of the support structure and may, for example, be monolithically integrated in the RFID-tag IC. Based on the readings from such sensors, the care system may come up with advice such as: "put in a warmer place", "place in direct sunlight", etc.

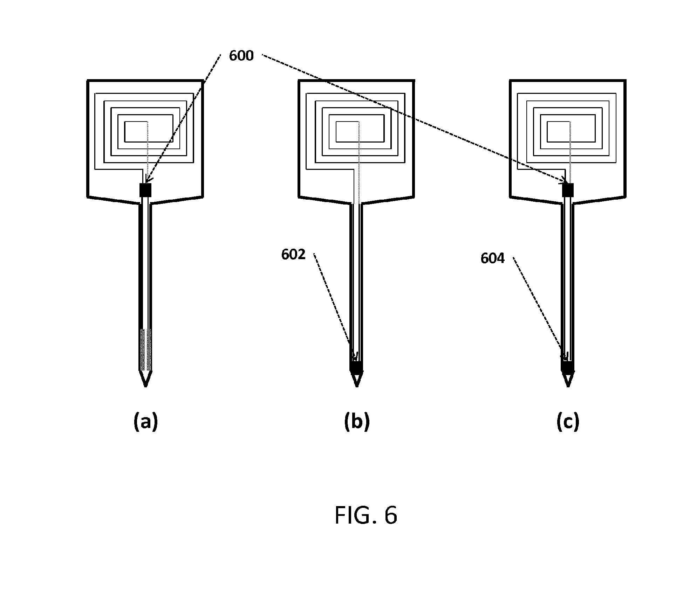

**Figs. 6(a)****-(c)** illustrate different options for IC placement on the support structure of an RFID-enabled plant label. Depending on whether silicon devices are used as sensors for measuring soil parameters and/or environmental parameters, an IC will be disposed on the protruding part, the label part or both. In Fig. 6(a), a plant label comprising silicon-based environmental sensors (plus a conventional soil moisture sensor) is depicted. In Fig. 6(b) a plant label comprising silicon-based soil sensors (and no environmental sensors) is depicted. In Figure 6(c) a plant label comprising both silicon-based soil sensors and silicon-based environmental sensors is depicted. The latter means that two IC's are disposed on the support structure and, preferably, that the IC for sensing the environmental parameters is also the RFID-tag IC, because the RFID antenna is preferably disposed on the label part and hence closest that IC.

It must be noted, that any of the soil or environmental parameters mentioned above are only determined at the moment when the plant label is read out by the RFID reader device, i.e. typically when the user is watering the plant. For the (slowly changing) soil parameters this is not a problem, but for some of the environmental parameters it might be. For example, when the plants are commonly watered at night time, the care system could infer that there is too little daylight. Some of these shortcomings might be taken away by correlating the measurements with the time-of-day when they are taken. When the RFID reader device computes a plant care advice for the user, it is usually aware of the time-of-day. In any case, the type of sensors deployed for any of the purposes described above should be ultra-low power sensors capable of operating from the energy extracted from the RF field.

### Logging and embedded power source

The above-described embodiments may be used to determine soil moisture and other soil and environmental parameters when the user is watering the plant. In addition, it may be advantageous to monitor some of these parameters more frequently, for example periodically. Periodic measurements may for example be used to compute a better plant care advice for the user. To enable the plant label to perform more frequent sensing it must be enabled to perform measurements autonomously (i.e. not merely triggered by the RFID reader device, but see "Variant: medium-range and long-range RFID-tags" below). This implies that the plant label must comprise a power source of its own.

Several illustrative embodiments of a self-powered plant tag may be conceived. For example, a small photovoltaic cell charging a (super) capacitor or a battery could be used as a power source. An ultra-low power timing device makes sure that the controller of the RFID-tag IC is woken up periodically (e.g. hourly) to take some sensor measurements and log the results in the non-volatile memory unit of said RFID-tag IC. Alternatively, the controller may be woken up when sufficient voltage (and hence charge) is present on the (super) capacitor. In this case, the frequency of waking up can be interpreted as an integral light level measurement. In any case, upon the next time the user uses the RFID reader device to read out the plant tag, a plant care advice will be computed taking the measurement logs in the non-volatile memory unit into account. An alternative energy source for photovoltaic may be a primary (e.g. printed) or even a soil battery (also known as an "earth battery").

It is noted that for logging some of the environmental parameters, sensing in the plant label is not absolutely necessary; a separate climate monitoring device (e.g. an electronic network-enabled weather station) may be used to e.g. provide temperature and relative humidity data. In this case, the RFID reader device computing the plant care advice must also connect to the climate monitoring device using another wireless link.

### Medium-range and long-range RFID tags

The illustrative embodiments described in detail above assume that the RFID interface is a short-range RFID interface; in order to obtain a plant care advice, the RFID reader device must be brought into close range (< 10 cm) of the plant label. Short-range RFID interfaces such as NFC provide a very intuitive user experience; the user virtually has to "touch" the plant label with the RFID reader device (e.g. phone or smart watering can) and obtains a plant care advice relating to the associated plant. However, also longer-range RFID technologies are known. For example, UCODE (operates in the 860-960 MHz band) provides ranges of up to 5 meters in logistics applications by utilizing professional readers, but more cost-effective consumer grade readers still support ranges of up to 1-1.5 meters. As another example, long-range Hitag readers (operating in the 125 kHz band) allow ranges of 60 centimeters and beyond. Also, ICODE readers (according to the standard IS015693; operating in the 13.56 MHz band) are known to be used for distances of up to 1.5 meters.

For the purpose of the present disclosure medium-range (< 1m) and long-range (< 5m) readers are distinguished. In the following, two illustrative embodiments are sketched utilizing medium-range and long-range readers, respectively. A medium-range RFID reader device could be deployed as part of a smart watering can. This is a variant of the short-range smart watering can described above (see "Smart watering can"). While watering the plants the user walks around the room with the smart watering can. At any moment, one or more plant labels may be within its reading range. A display is used to list the plants that are within reading range and for each plant a plant care advice is given. Preferably the plants are identified on the display (e.g. by the plant name printed on their plant label). Optionally, the plants are listed in order of decreasing signal strength; the signal strength being an indicator of the physical distance to the plant. In other words, the plants may be listed in order of proximity.

A long-range RFID reader device could be mounted in a fixed (preferably central) location in the room. In principle all plants within the room should be within its reading range. The long-range RFID reader will periodically read the plant labels of all plants and store the results of the measurements, thus building up a log of measurements for each plant. It must be noted that in this embodiment periodic logging is enabled without requiring a power source in each plant label, which in turn enables lower cost plant labels. Environmental parameters that can be assumed to be more or less constant across the room (e.g. ambient temperature and relative humidity) can be provided by centralized sensors instead, for example sensors integrated into the RFID reader device. A user interface (e.g. touch screen) is provided to display a plant care advice for each of the plants. This user interface could be provided by the RFID reader device as well, but preferably it is provided by a portable device that is wirelessly connected to the RFID reader device. For example, the user interface is provided by a smart phone or a tablet that connects to the home Wi-Fi network, whereas the RFID reader device also connects to that Wi-Fi network.

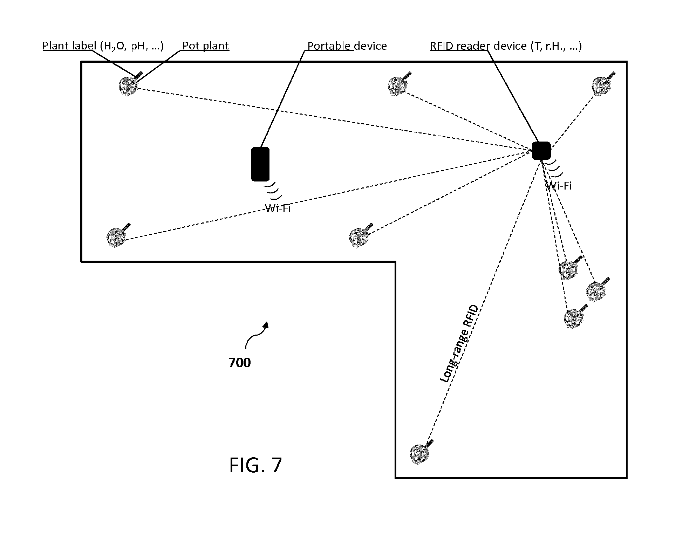

**Fig. 7** illustrates a plant care system in accordance with a further illustrative embodiment of the invention. As an example, the user interface for providing the plant care advice in this embodiment may comprise a floor plan of the room showing an icon for each plant at its corresponding location. Each icon may show the plant care advice in a very abbreviated form (e.g. red blinking if the user needs to take some action). Touching an icon may reveal the full details of the plant care advice for the plant concerned. In order for such a user interface to function properly, each plant should initially be localized on the appropriate location on the floor plan. A method as disclosed in the European patent application titled "Localization Method, Computer Program Product and Localization Device", application number EP11191881.9, filed by NXP B.V. on 05 December 2011, may facilitate this localization.

The physical coordinates of each plant may be programmed into the corresponding plant label by utilizing an additional short-range RFID interface (e.g. NFC). In other words, the plant label may comprise a dual interface RFID-tag IC (e.g. both NFC and UCODE) where the short-range interface (i.e. NFC) is used for configuring the plant label with a location and where the long-range interface (i.e. UCODE) is used to read sensor values, as well as physical location from the plant label. For configuring the plant label a portable device (e.g. an NFC-enabled mobile phone) may be used, which may be the same device as used for displaying the plant care advice.

The use of a long-range RFID reader may be particularly advantageous for plant care in office buildings. Plant care in office buildings is often outsourced to third-party companies. Before sending in plant care personnel, a remote assessment of the state of the plants can be made. It should be noted that remote assessment may involve the RFID reader being accessible over the Internet (e.g. via the above-mentioned Wi-Fi connection). Based on the assessment, the third party company can make an informed decision as to when and whether to send plant care personnel over and to give him or her the proper materials (e.g. fertilizer, new plants to replace dead ones and/or new plant labels to replace broken ones) for the tasks at hand.

It is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time-consuming, but would nevertheless be a routine undertaking of design, fabrication, and manufacture for those of ordinary skill.

The above-mentioned embodiments illustrate rather than limit the invention, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The invention may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: label part
- 102: RFID antenna
- 104: RFID-tag IC
- 106: support structure
- 108: protruding part
- 110: soil moisture sensor
- 200: plant label
- 202: RFID-tag IC
- 204: RFID transponder
- 206: memory unit
- 208: controller
- 210: sensor interface
- 212: soil moisture sensor
- 214: RFID interface
- 216: RFID reader device
- 218: RFID reader
- 220: controller
- 222: memory unit
- 224: display
- 300: container
- 302: tube
- 304: handle
- 306: RFID antenna
- 308: display
- 400: bare metal strips
- 500: insulated metal strips
- 600: RFID-tag IC with environmental sensors
- 602: RFID-tag IC with soil sensors
- 604: IC with soil sensors
- 700: plant care system

## Claims

1. An RFID-enabled plant label comprising an RFID-tag integrated circuit, an RFID antenna being coupled to the RFID-tag integrated circuit and a soil moisture sensor being coupled to the RFID-tag integrated circuit, wherein said RFID-tag integrated circuit is arranged to receive soil moisture measurement results from said soil moisture sensor.

2. An RFID-enabled plant label as claimed in claim 1, wherein the RFID-tag integrated circuit is further arranged to transmit the soil moisture measurement results through the RFID antenna to an RFID reader device for further processing.

3. An RFID-enabled plant label as claimed in claim 1 or 2, wherein the RFID-tag integrated circuit is further arranged to compute a plant care advice based on the soil moisture measurement results and to transmit the plant care advice through the RFID antenna to an RFID reader device for further processing.

4. An RFID-enabled plant label as claimed in any preceding claim, wherein plant care parameters related to a specific plant and/or a specific pot are stored in a non-volatile memory unit of the RFID-enabled plant label.

5. An RFID-enabled plant label as claimed in claim 4, wherein the RFID-tag integrated circuit is further arranged to compute a plant-specific and/or a pot-specific plant care advice based on the soil moisture measurement results and on said plant care parameters, and to transmit the plant-specific and/or the pot-specific plant care advice through the RFID antenna to an RFID reader device for further processing.

6. An RFID-enabled plant label as claimed in claim 4 or 5, wherein, if plant care parameters related to a specific plant are stored in said non-volatile memory unit, said plant care parameters comprise at least one threshold value for the soil moisture.

7. An RFID-enabled plant label as claimed in claim 6, wherein the RFID-tag integrated circuit is further arranged to select a threshold value from a plurality of threshold values in dependence on a state of the specific plant and/or on the time-of-year, and to compute a plant-specific plant care advice using the selected threshold value.

8. An RFID-enabled plant label as claimed in claim 4 or 5, wherein, if plant care parameters related to a specific pot are stored in said non-volatile memory unit, said plant care parameters comprise the volume of said specific pot.

9. An RFID-enabled plant label as claimed in any of claims 4 to 8, wherein the plant care parameters are pre-stored into the non-volatile memory unit upon manufacturing of the plant label or wherein the plant care parameters are written into the non-volatile memory unit by an RFID reader device, and wherein, if the plant care parameters are written into the non-volatile memory unit by the RFID reader device, the plant care parameters may have been entered manually by a user on the RFID reader device, fetched upon selection from a database stored on the RFID reader device or retrieved by the RFID reader device from a remote database.

10. An RFID-enabled plant label as claimed in any of claims 4 to 9, wherein additional information about a plant is stored in the non-volatile memory unit, said additional information being provided in human-readable format or by reference to a website.

11. An RFID-enabled plant label as claimed in any preceding claim, further comprising at least one additional sensor of the group containing: a sensor for measuring nutrient-related parameters, a sensor for measuring biochemical parameters and a sensor for measuring environmental parameters; wherein the at least one additional sensor is coupled to the RFID-tag integrated circuit, and wherein said RFID-tag integrated circuit is further arranged to receive measurement results from the at least one additional sensor and, optionally, to compute a plant care advice based on measurement results from the at least one additional sensor.

12. An RFID-enabled plant label as claimed in any preceding claim, wherein the RFID-tag integrated circuit is further arranged to create a log of measurement results and, optionally, to compute a plant care advice based on said log of measurement results.

13. An RFID-enabled plant label as claimed in any preceding claim, further being arranged to extract operating power from the RF field generated by an RFID reader device.

14. An RFID-enabled plant label as claimed in any preceding claim, further comprising a label part, said label part comprising visible, human-readable information corresponding to plant-specific data stored in a non-volatile memory unit of the RFID-tag integrated circuit.

15. An RFID-enabled plant label as claimed in any preceding claim, said RFID-enabled plant label being integrated in a plant pot.

16. A plant care system comprising an RFID-enabled plant label as claimed in any preceding claim and an RFID reader device, wherein said RFID reader device is arranged to receive measurement results and/or a plant care advice from the RFID-tag integrated circuit, to compute a plant care advice if it has received measurement results, and to display the measurement results, the received plant care advice and/or the computed plant care advice.

17. A plant care system as claimed in claim 16, wherein the RFID-tag integrated circuit is an NFC tag and the RFID reader device is an NFC-enabled mobile device.

18. A plant care system as claimed in claim 16, wherein the RFID reader device is a watering can.

19. A plant care system as claimed in claim 18, wherein an RFID reader antenna is mounted on or near the bottom side of a container or a tube of said watering can, and wherein a display unit is mounted on the top side of said container or tube.

20. A plant care system as claimed in claim 18 or 19, wherein said watering can comprises a water supply measurement unit which is arranged to measure the amount of water supplied to a plant.

21. A plant care system as claimed in claim 16, wherein the RFID reader device is further arranged to read measurement results and/or plant care advices from a plurality of RFID-enabled plant labels within its communication range, to compute plant care advices if it has received measurement results, and to display the respective measurement results, received plant care advices and/or computed plant care advices.

22. A plant care system as claimed in claim 21, wherein the RFID reader device is further arranged to display said respective measurement results and/or said respective plant care advices in order of proximity of the corresponding RFID-enabled plant labels.

23. A plant care system as claimed in claim 16, wherein the RFID reader device is further arranged to read measurement results from a plurality of RFID-enabled plant labels within its communication range, and to create a log of said measurement results for each RFID-enabled plant label within said communication range, such that a plant care advice may be generated for each corresponding plant.

24. A plant care method wherein an RFID reader device receives measurement results and/or a plant care advice from an RFID-tag integrated circuit comprised in an RFID-enabled plant label as claimed in any of claims 1 to 15, wherein the RFID reader device computes a plant care advice if it has received measurement results, and wherein said RFID reader device displays the measurement results, the received plant care advice and/or the computed plant care advice.

25. A computer program product comprising program elements executable by an RFID reader device or an RFID-tag integrated circuit, said program elements comprising instructions which, when being executed by said RFID reader device and RFID-tag integrated circuit, carry out or control respective steps of a method as claimed in claim 24.
